# EUROPÄISCHE PATENTSCHRIFT

(11) **EP 2 690 305 B1**
(45) Veröffentlichungstag und Bekanntmachung des Hinweises auf die Patenterteilung: **09.03.2016**
(21) Anmeldenummer: 12005429.1
(22) Anmeldetag: 26.07.2012
(51) Int. Cl.: F16F 1/373, F16F 15/08, F16F 15/12, F16C 27/06, B60K 17/24

(54) **Kardanwellenlager**
Cardan shaft bearing
Palier d'arbre de cardan

(43) Veröffentlichungstag der Anmeldung: 29.01.2014
(73) Patentinhaber: TrelleborgVibracoustic GmbH, 64293 Darmstadt (DE)
(72) Erfinder: Armbruster, Timo, 77736 Zell a. H. (DE); Altan, Atilla, 79206 Breisach (DE); Hofhansl, Frank, 79424 Auggen (DE); Back, Friedrich, 79379 Müllheim (DE); Dürre, Markus, 79395 Neuenburg (DE); Götz, Frederik, 79206 Neuenburg (DE)
(74) Vertreter: Flügel Preissner Schober Seidel

(56) Entgegenhaltungen:
- DE-A1- 3 446 518
- DE-A1- 3 908 965
- DE-A1- 4 139 923
- DE-A1-102004 038 023
- DE-A1-102007 037 401
- DE-B3-102008 009 978
- GB-A- 2 359 121
- US-A- 3 639 015

## Beschreibung

### Technisches Gebiet

Die Erfindung betrifft eine Vorrichtung gemäß dem Oberbegriff des Patentanspruchs 1.

### Stand der Technik

Aus der DE 10 2004 038 023 A1 ist eine Vorrichtung bekannt, welche einen Außenring und einen konzentrisch zum Außenring angeordneten Innenring umfasst. Der Außenring und der Innenring sind mittels eines ringartigen, elastomeren Federelements miteinander verbunden.

Ein erster Ringrand des Außenrings ist mit einem ersten Elastomerrand des Federelements formschlüssig verbunden, wobei ein zweiter Ringrand des Innenringes mit einem zweiten Elastomerrand des Federelements formschlüssig verbunden ist.

Diese Vorrichtung wird als Schwingungstilger verwendet und findet vorzugsweise zur Schwingungsdämpfung bei Lenkrädern Anwendung. Sie ist für solche Systeme geeignet, die die Verwendung eines Airbaggasgenerators als Schwingungsmasse vorsehen.

Die aus dem Stand der Technik bekannte Vorrichtung ist jedoch nur wenig geeignet, um im Bereich von Kardanwellen eingesetzt zu werden.

Das elastomere Federelement der Vorrichtung des Stands der Technik ist geometrisch derart ausgebildet, dass Bewegungen des Außenrings relativ zum Innenring nur unter erheblicher Belastung des Federelements selbst aufgenommen werden können.

Das im Wesentlichen zylindrisch bzw. kegelstumpfartig ausgeformte Federelement überträgt relativ unmittelbar Spannungen auf die Ringränder. Insbesondere kann so das Problem auftreten, dass sich die Ringränder von den Elastomerrändern ablösen und die gesamte Vorrichtung erheblichen Schaden nimmt. Des Weiteren kann das elastomere Federelement auch zwischen den Elastomerrändern bzw. in der Mitte einreißen.

DE 39 08 965 A1 zeigt ein Kardanwellenlager mit einem Außenring und einem Innenring, die über einen Zwischenring miteinander verbunden sind. Der Innenring weist eine Aussparung auf, durch welche der Gummi des Zwischenrings hindurch verläuft.

DE 10 2008 009 978 B3 offenbart ein Lager für eine Kardanwelle mit einer Aufnahme und einen Hüllkörper, welche über ein Federelement miteinander verbunden sind. Das Federelement umgibt den Hüllkörper vollständig, so wie auch die Aufnahme vollständig von dem Federelement umgeben ist.

DE 34 46 518 A1 offenbart ein doppelelastisches Wellenlager, das ein elastisch deformierbares Elastomer zwischen einem Innenring und einem Stützring aufweist.

GB 2 359 121 A zeigt eine Antriebswellenlageranordnung mit einem äußeren ringförmigen Element und einem inneren ringförmigen Element, welche stoffschlüssig mit einem Stützelement aus Gummi miteinander verbunden sind.

### Darstellung der Erfindung

Der Erfindung liegt vor diesem Hintergrund die Aufgabe zugrunde, eine Vorrichtung der eingangs genannten Art derart auszugestalten und weiterzubilden, dass die Bewegungen des Außenrings relativ zum Innenring möglichst beschädigungsfrei vom Federelement aufgenommen werden können.

Erfindungsgemäß wird die voranstehende Aufgabe mit den Merkmalen des Patentanspruchs 1 gelöst.

Erfindungsgemäß ist erkannt worden, dass ein Federelement, welches eine Falte aufweist, Axial- und/oder Radialverschiebungen des Außenrings relativ zum Innenring problemlos aufnehmen kann. Eine Falte ist leicht deformierbar und bildet insoweit eine Dehn- oder Knautschzone des Federelements aus, welche Zug- oder Druckspannungen aufnehmen kann. Die Elastomerränder werden durch die Deformierung der Falte entlastet, wenn sich der Außenring und der Innenring relativ zueinander bewegen. Erst bei einer Glättung der Falte wird Kraft auf die Ringränder bzw. Elastomerränder übertragen. Insoweit schützt die Falte die Vorrichtung vor erheblichen Beschädigungen.

Folglich ist die genannte Aufgabe löst.

Die Falte kann rotationssymmetrisch oder nicht rotationssymmetrisch ausgestaltet sein.

Das Federelement könnte zwischen dem ersten Elastomerrand und dem zweiten Elastomerrand eine umlaufende, tüllenartige Falte aufweisen, welche eine Axial- und/ oder Radialverschiebung des Außenrings relativ zum Innenring unter reversibler Deformierung aufnimmt. Die Elastomerränder werden durch die Deformierung der tüllenartigen Falte entlastet, wenn sich der Außenring und der Innenring relativ zueinander bewegen. Erst bei einer Glättung der Falte wird Kraft auf die Ringränder bzw. Elastomerränder übertragen.

Die Falte könnte derart ausgewölbt sein, dass sie von einem Ringspalt zwischen Außenring und Innenring weggerichtet ist. Durch diese konkrete Ausgestaltung ragt die Falte von Außenring und Innenring derart ab, dass sie eine relativ hohe Bewegungsfreiheit erfährt. Die Falte wird während ihrer Deformierung nahezu nicht zwischen Außenring und Innenring eingeklemmt.

Vor diesem Hintergrund könnte die Falte derart ausgewölbt sein, dass sie in Richtung eines Ringspalts zwischen Außenring und Innenring gerichtet ist. Eine solche Ausgestaltung ist in axialer Richtung besonders kompakt bauend.

Der erste Ringrand des Außenrings und/oder der zweite Ringrand des Innenrings sind mit Durchgängen versehen sein. Hierdurch ist eine formschlüssige Verbindung mit dem elastomeren Federelements erzielbar. Vor diesem Hintergrund ist denkbar, dass sowohl der Innenring als auch der Außenring mit Durchgängen versehen sind, welche als Durchtrittsöffnungen für ein Elastomer dienen.

Es ist auch denkbar, dass der Außenring keine Durchgänge aufweist und mit einem Bindemittel beschichtet ist. Der zweite Ringrand des Innenrings hingegen weist hierbei jedoch Durchgänge auf, um eine formschlüssige Verbindung mit dem Elastomer des Federelements zu erzielen. Genauso ist möglich, dass der Innenring mit Bindemittel beschichtet und der Außenring mit Durchgängen zur Herstellung eines Formschlusses versehen ist.

Die Falte könnte einen Stützring aufweisen. Auch der Stützring könnte Durchgänge aufweisen, um eine formschlüssige Verbindung mit dem Elastomer des Federelements herzustellen.

Bisher wurden Stützringe, Außenringe und Innenringe mit Bindemittel beschichtet, um eine Haftverbindung zwischen dem Elastomer eines Federelements mit einer Falte bzw. einer Ring -oder Rollfalte zu bewirken.

Hierdurch sollte eine Haftverbindung zwischen einem Metall und dem Elastomer hergestellt werden. Der Einsatz von Durchgängen, die als Durchtrittsöffnungen für das Elastomer des Federelements dienen, macht eine Haftverbindung überflüssig.

Sofern an einem Innenring oder Außenring Durchgänge ausgebildet sind, wird lediglich ein Formschluss, jedoch nahezu keine Haftverbindung zwischen dem Elastomer des Federelements und dem Innenring bzw. dem Außenring hergestellt.

Die Durchgänge bilden eine gitterartige oder netzartige Struktur aus. Durch eine gitter- oder netzartige Struktur wird eine Vielzahl von Durchgängen geschaffen, durch welche das Elastomer des Federelements hindurchtreten kann. Die gitterartige oder netzartige Struktur erzeugt eine enge Verzahnung und eine rasterartige Verbindung des Elastomers des Federelements mit den Ringrändern.

Die Falte könnte als Ringfalte oder Rollfalte ausgebildet sein. Eine solche ringsum laufende Ringfalte oder Rollfalte ist leicht deformierbar und bildet insoweit eine Dehn- oder Knautschzone des Federelements aus, welche Zug- oder Druckspannungen aufnehmen kann.

Die hier beschriebene Vorrichtung eignet sich besonders zur Verwendung in einem Kardanwellenlager, da die Falte als Rollfalte dient und Axial- bzw. Radialverschiebungen des Außenrings relativ zum Innenring unter Deformierung der Falte aufnehmen kann. Die Falte wird reversibel deformiert und nicht zerstört. Die Falte wird derart deformiert, dass nahezu kein Zug auf die Ringränder übertragen wird.

Bei der Verwendung als Kardanwellenlager wird der Außenring einem Träger eines Kraftfahrzeugchassis zugeordnet, wobei der Innenring mit einem Kugellager verbunden wird, welches eine Kardanwelle umgreift.

### Kurzbeschreibung der Zeichnung

In der Zeichnung zeigen
- Fig. 1: in einer perspektivischen Ansicht eine Vorrichtung, bei welcher sowohl der Innenring als auch der Außenring mit Ringrändern versehen sind, die Durchgänge aufweisen, welche eine gitterartige Struktur ausbilden, und
- Fig. 2: eine weitere, teilweise geschnittene Ansicht der Vorrichtung gemäß Fig. 1.

### Ausführung der Erfindung

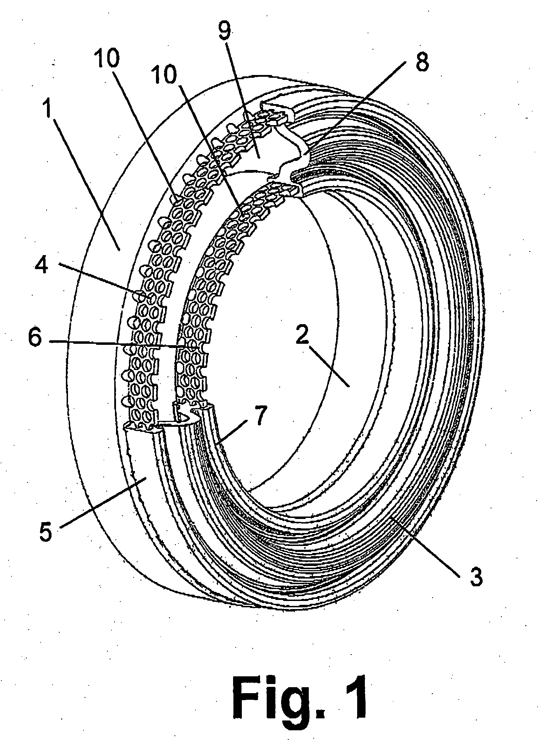

Fig. 1. zeigt eine Vorrichtung umfassend einen Außenring 1 und einen konzentrisch zum Außenring 1 angeordneten Innenring 2, wobei der Außenring 1 und der Innenring 2 mittels eines ringartigen elastomeren Federelements 3 miteinander verbunden sind, wobei ein erster Ringrand 4 des Außenrings 1 mit einem ersten Elastomerrand 5 des Federelements 3 formschlüssig verbunden ist und wobei ein zweiter Ringrand 6 des Innenrings 2 mit einem zweiten Elastomerrand 7 des Federelements 3 formschlüssig verbunden ist.

Das Federelement 3 weist zwischen dem ersten Elastomerrand 5 und dem zweiten Elastomerrand 7 eine Falte 8 auf.

Das Federelement 3 weist zwischen dem ersten Elastomerrand 5 und dem zweiten Elastomerrand 7 eine umlaufende tüllenartige Falte 8 auf, welche eine Axial- und/oder Radialverschiebung des Außenrings 1 relativ zum Innenring 2 unter reversibler Deformierung aufnimmt.

Die Falte 8 ist derart ausgewölbt, dass sie von einem Ringspalt 9 zwischen Außenring 1 und Innenring 2 weggerichtet ist. Die Falte 8 ist in einer Draufsicht von rechts gemäß Fig. 1 konvex gewölbt.

Der erste Ringrand 4 des Außenrings 1 und der zweite Ringrand 6 des Innenrings 2 ist jeweils mit Durchgängen 10 versehen. Die Durchgänge 10 bilden eine gitterartige oder netzartige Struktur aus.

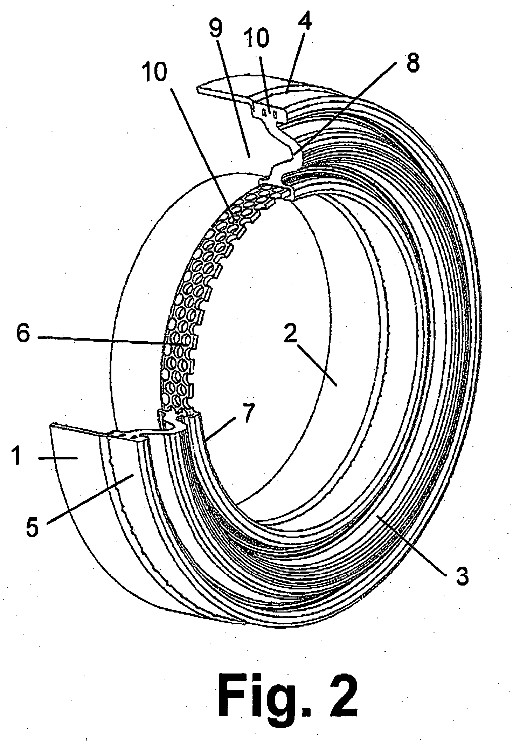

Fig. 2 zeigt die Vorrichtung gemäß Fig. 1 in einer teilweise geschnittenen Ansicht.

Die Falte 8 ist als Ringfalte oder Rollfalte ausgebildet Sie ist ringsum laufend und rotationssymmetrisch ausgestaltet.

Die Vorrichtungen gemäß Fig. 1 und Fig. 2 werden als Kardanwellenlager verwendet.

## Patentansprüche

1. Vorrichtung, umfassend einen Außenring (1) und einen konzentrisch zum Außenring (1) angeordneten Innenring (2), wobei der Außenring (1) und der Innenring (2) mittels eines ringartigen, elastomeren Federelements (3) miteinander verbunden sind, wobei lediglich ein erster Ringrand (4) des Außenrings (1) mit einem ersten Elastomerrand (5) des Federelements (3) formschlüssige verbunden ist und/ oder wobei lediglich ein zweiter Ringrand (6) des Innenrings (2) mit einem zweiten Elastomerrand (7) des Federelements (3) formschlüssig verbunden ist, wobei das Federelement (3) zwischen dem ersten Elastomerrand (5) und dem zweiten Elastomerrand (7) eine Falte (8) aufweist, **dadurch gekennzeichnet, dass**
der erste Ringrand (4) des Außenrings (1) und/ oder der zweite Ringrand (6) des Innenrings (2) mit Durchgängen (10) versehen sind und
dass die Durchgänge (10) eine gitterartige oder netzartige Struktur ausbilden.

2. Vorrichtung nach Anspruch 1, **dadurch gekennzeichnet, dass** das Federelement (3) zwischen dem ersten Elastomerrand (5) und dem zweiten Elastomerrand (7) eine umlaufende, tüllenartige Falte (8) aufweist, welche eine Axial- und/ oder Radialverschiebung des Außenrings (1) relativ zum Innenring (2) unter reversibler Deformierung aufnimmt.

3. Vorrichtung nach Anspruch 1 oder 2, **dadurch gekennzeichnet, dass** die Falte (8) derart ausgewölbt ist, dass sie von einem Ringspalt (9) zwischen Außenring (1) und Innenring (2) weg gerichtet ist.

4. Vorrichtung nach Anspruch 1 oder 2, **dadurch gekennzeichnet, dass** die Falte derart ausgewölbt ist, dass sie in Richtung eines Ringspalts (9) zwischen Außenring (1) und Innenring (2) gerichtet ist.

5. Vorrichtung nach einem der Ansprüche 1 bis 4, **dadurch gekennzeichnet, dass** die Falte (8) als Ringfalte oder Rollfalte ausgebildet ist.

6. Verwendung einer Vorrichtung nach einem der Ansprüche 1 bis 5 als Kardanwellenlager.

## Claims

1. An apparatus comprising an outer ring (1) and an inner ring (2) disposed concentrically with the outer ring (1), wherein the outer ring (1) and the inner ring (2) are connected to each other by means of a ring-like, elastomeric spring member (3), wherein only a first ring rim (4) of the outer ring (1) is positively connected to a first elastomeric rim (5) of the spring member (3) and/or wherein only a second ring rim (6) of the inner ring (2) is positively connected to a second elastomeric rim (7) of the spring member (3), wherein the spring member (3) has a crease (8) between the first elastomeric rim (5) and the second elastomeric rim (7),
**characterized in that**
the first ring rim (4) of the outer ring (1) and/or the second ring rim (6) of the inner ring (2) are provided with through-holes (10), and
that the through-holes (10) form a grid-like or net-like structure.

2. The apparatus according to claim 1, **characterized in that** the spring member (3), between the first elastomeric rim (5) and the second elastomeric rim (7), has a peripherally extending, spout-like crease (8), which absorbs an axial and/or radial displacement of the outer ring (1) relative to the inner ring (2) while being reversibly deformed.

3. The apparatus according to claim 1 or 2, **characterized in that** the crease (8) bulges in such a way that it is directed away from an annular gap (9) between the outer ring (1) and the inner ring (2).

4. The apparatus according to claim 1 or 2, **characterized in that** the crease bulges in such a way that it is directed in the direction of an annular gap (9) between the outer ring (1) and the inner ring (2).

5. The apparatus according to any one of the claims 1 to 4, **characterized in that** the crease (8) is configured as a ring crease or rolling crease.

6. Use of an apparatus according to any one of the claims 1 to 5 as a cardan shaft bearing.

## Revendications

1. Dispositif, incluant une bague extérieure (1) et une bague intérieure (2) agencée concentriquement par rapport à la bague extérieure (1), dans lequel la bague extérieure (1) et la bague intérieure (2) sont reliées l'une à l'autre au moyen d'un élément à ressort (3) de forme annulaire en élastomère, de telle sorte que seule une première bordure annulaire (4) de la bague extérieure (1) est reliée en coopération de formes avec une première bordure élastomère (5) de l'élément à ressort (3) et/ou de telle sorte que seule une seconde bordure annulaire (6) de la bague intérieure (2) est reliée en coopération de formes avec une seconde bordure élastomère (7) de l'élément à ressort (3), et l'élément à ressort (3) comporte un repli (8) entre la première bordure élastomère (5) et la seconde bordure élastomère (7),
**caractérisé en ce que**
la première bordure annulaire (4) de la bague extérieure (1) et/ou la seconde bordure annulaire (6) de la bague intérieure (2) est dotée de traversées (10),
et **en ce que** les traversées (10) forment une structure en forme de grillage ou en forme de réseau.

2. Dispositif selon la revendication 1, **caractérisé en ce que** l'élément à ressort (3) comporte, entre la première bordure élastomère (5) et la seconde bordure élastomère (7) un repli périphérique (8) semblable à un passe-fil, qui encaisse un déplacement axial et/ou un déplacement radial de la bague extérieure (1) par rapport à la bague intérieure (2) sous déformation réversible.

3. Dispositif selon la revendication 1 ou 2, **caractérisé en ce que** le repli (8) est bombé de telle façon qu'il est orienté en éloignement depuis une fente annulaire (9) entre la bague extérieure (1) et la bague intérieure (2).

4. Dispositif selon la revendication 1 ou 2, **caractérisé en ce que** le repli est bombé de telle façon qu'il est orienté en direction d'une fente annulaire (9) entre la bague extérieure (1) et la bague intérieure (2).

5. Dispositif selon l'une des revendications 1 à 4, **caractérisé en ce que** le repli (8) est réalisé sous forme de repli annulaire ou de repli déroulant.

6. Utilisation d'un dispositif selon l'une des revendications 1 à 5, à titre de palier pour arbre de cardan.
